(19) Europäisches Patentamt
European Patent Office
Office européen des brevets

(11) EP 2 663 078 A2

(12) EUROPEAN PATENT APPLICATION
published in accordance with Art. 153(4) EPC

(43) Date of publication:
13.11.2013 Bulletin 2013/46

(51) Int Cl.:
H04N 7/32 (2006.01)

(21) Application number: 12732058.8

(22) Date of filing: 06.01.2012

(86) International application number:
PCT/KR2012/000154

(87) International publication number:
WO 2012/093890 (12.07.2012 Gazette 2012/28)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 07.01.2011 US 201161430627 P

(71) Applicant: Samsung Electronics Co., Ltd
Gyeonggi-do 443-742 (KR)

(72) Inventors:
• LEE, Tammy
  Seoul 137-070 (KR)

• KIM, Il-koo
  Osan-si
  Gyeonggi-do 447-756 (KR)
• CHEON, Min-su
  Yongin-si
  Gyeonggi-do 446-591 (KR)

(74) Representative: Robinson, Ian Michael
Appleyard Lees
15 Clare Road
Halifax, Yorkshire HX1 2HY (GB)

(54) **VIDEO PREDICTION METHOD CAPABLE OF PERFORMING BILATERAL PREDICTION AND UNILATERAL PREDICTION AND A DEVICE THEREOF, VIDEO ENCODING METHOD AND DEVICE THEREOF, AND VIDEO DECODING METHOD AND DEVICE THEREOF**

(57) Provided are inter prediction of a video, and encoding and decoding a video using an inter prediction. A video prediction method includes: determining reference information indicating at least one reference image for inter predicting an image; determining a first reference list and a second reference list, which each include the reference information and a reference order of the at least one reference image; and if the determined reference information indicates only images for uni-directional prediction, generating a reconstructed image by referring to images indicated by the first and second lists in a same reference order.

FIG. 1

**Description**

Technical Field

The present invention relates to inter prediction of a video, and encoding and decoding a video using inter prediction.

Background Art

As hardware for reproducing and storing high resolution or high quality video content is being developed and supplied, a need for a video codec for effectively encoding or decoding the high resolution or high quality video content is increasing. In a conventional video codec, a video is encoded according to a limited encoding method based on a macroblock having a predetermined size.

In a video codec, a data quantity is reduced by using a prediction technique using a characteristic that images of a video have a high spatial or temporal correlation. According to the prediction technique, in order to predict a current image by using an adjacent image, image information is recorded by using a temporal or spatial distance, and a prediction error between images.

Disclosure of the Invention

Technical Problem

The present invention provides an inter prediction technique capable of a bi- or uni-directional prediction, and video encoding and decoding methods and apparatuses using inter prediction including an effective bi- or uni-directional prediction.

Technical Solution

According to an aspect of the present invention, there is provided a video prediction method including: determining reference information indicating at least one reference image for inter predicting an image; determining a first reference list and a second reference list, which each include the reference information and a reference order of the at least one reference image; and if the determined reference information indicates only images for uni-directional prediction, generating a reconstructed image by referring to images indicated by the first and second lists in a same reference order.

Advantageous Effects

A prediction may be performed according to an order of reference images having highest prediction efficiency, by determining a reference list according to a video prediction mode capable of a bi- or uni-directional prediction.

Brief Description of the Drawings

FIG. 1 is a block diagram of a video prediction apparatus according to an embodiment of the present invention;
FIG. 2 is a block diagram of a video prediction encoding apparatus according to an embodiment of the present invention;
FIG. 3 is a block diagram of a video prediction decoding apparatus according to an embodiment of the present invention;
FIG. 4 is a flowchart illustrating a video prediction method according to an embodiment of the present invention;
FIG. 5 is a flowchart illustrating a video prediction encoding method according to an embodiment of the present invention;
FIG. 6 is a flowchart illustrating a video prediction decoding method according to an embodiment of the present invention;
FIG. 7 is a block diagram of a video encoding apparatus using prediction based on coding units according to a tree structure, according to an embodiment of the present invention;
FIG. 8 is a block diagram of a video decoding apparatus using prediction based on coding units according to a tree structure, according to an embodiment of the present invention;
FIG. 9 is a diagram for describing a concept of coding units according to an embodiment of the present invention;
FIG. 10 is a block diagram of an image encoder based on coding units according to an embodiment of the present invention;

FIG. 11 is a block diagram of an image decoder based on coding units according to an embodiment of the present invention;

FIG. 12 is a diagram illustrating deeper coding units according to depths, and partitions according to an embodiment of the present invention;

FIG. 13 is a diagram for describing a relationship between a coding unit and transformation units, according to an embodiment of the present invention;

FIG. 14 is a diagram for describing encoding information of coding units corresponding to a coded depth, according to an embodiment of the present invention;

FIG. 15 is a diagram of deeper coding units according to depths, according to an embodiment of the present invention;

FIGS. 16 through 18 are diagrams for describing a relationship between coding units, prediction units, and transformation units, according to an embodiment of the present invention;

FIG. 19 is a diagram for describing a relationship between a coding unit, a prediction unit, and a transformation unit, according to encoding mode information of Table 1;

FIG. 20 is a flowchart illustrating a video encoding method using prediction based on coding units according to a tree structure, according to an embodiment of the present invention; and

FIG. 21 is a flowchart illustrating a video decoding method using prediction based on coding units according to a tree structure, according to an embodiment of the present invention.

Best mode for carrying out the Invention

According to an aspect of the present invention, there is provided a video prediction method including: determining reference information indicating at least one reference image for inter predicting an image; determining a first reference list and a second reference list, which each include the reference information and a reference order of the at least one reference image; and if the determined reference information indicates only images for uni-directional prediction, generating a reconstructed image by referring to images indicated by the first and second lists in a same reference order.

The video prediction method may further include generating the reconstructed image by referring to reference images for at least one of a first directional prediction and a second directional prediction indicated by the first and second reference lists in a first reference order and a second reference order.

The determining of the first and second reference lists may include, if reference information for inter predicting a current image in the B-slice type indicates only reference images for temporal uni-directional prediction, determining the reference order of the first reference list and the reference order of the second reference list to be same.

The generating of the reconstructed image may include, if the second reference list of a current image in the B-slice type does not include the at least one reference image, determining the second reference list to include the reference information and the reference order identical to the first reference list and generating the reconstructed image by referring to images indicated by the first and second reference lists.

The determining of the first and second reference lists may include, if reference images of a current image in the B-slice type comprise only reference images for a uni-directional prediction, determining numbers of reference images indicated by the first and second reference lists to be same, images indicated by the reference information included in the first and second reference lists to be same, and the reference orders of the first and second reference lists to be same.

According to another aspect of the present invention, there is provided a video prediction encoding method including: determining reference information indicating at least one reference image by predicting an image; determining a first reference list and a second reference list, which each comprise the reference information and a reference order of the at least one reference image; if the determined reference information indicates only images for uni-directional prediction, generating a reconstructed image by referring to images indicated by the first and second lists in a same reference order; and encoding the reference information and a prediction error.

The video prediction encoding method may further include, if reference information determined for a current image in the B-slice type indicates only reference images for a temporal uni-directional prediction, determining the reference orders of the first and second reference lists to be same.

The video prediction encoding method may further include, if reference images of an image in the B-slice type include reference images for a uni-directional prediction, encoding uni-directional prediction information indicating whether the reference orders of the first and second reference lists are same. The uni-directional prediction information for a current slice may be encoded according to at least one image unit from among a slice, a sequence, and a picture.

The video prediction encoding method may further include, if reference images determined for a current image include reference images for a uni-directional prediction in addition to an I-slice type, a P-slice type, and a B-slice type, encoding slice type information including a new slice type that is prediction encoded according to a prediction mode wherein the reference orders of the first and second reference lists are set to be same.

According to another aspect of the present invention, there is provided a video prediction decoding method including: receiving reference information indicating at least one reference image for inter predicting an image; determining a first reference list and a second reference list, which each comprise the reference information and a reference order of the at least one reference image; and if the determined reference information indicates only images for uni-directional prediction, generating a reconstructed image by referring to images indicated by the first and second lists in a same reference order.

The video prediction decoding method may include, if reference information determined for a current image in the B-slice type indicates only reference images for a temporal uni-directional prediction, determining the reference orders of the first and second reference lists to be same.

The video prediction decoding method may include, receiving uni-directional prediction information indicating whether the reference orders of the first and second lists for inter predicting an image in the B-slice type are same; and if reference images for inter predicting the image in the B-slice type include reference images for a uni-directional prediction, determining the reference orders of the first and second reference lists to be same based on the uni-directional prediction information.

The video prediction decoding method may further include: receiving the uni-directional prediction information for a current slice according to at least one image unit from among a slice, a sequence, and a picture; and determining the reference orders of the first and second reference lists to be same based on the uni-directional prediction information according to the at least one image unit from among a slice, a sequence, and a picture.

The video prediction decoding method may further include: receiving slice type information including a new slice type for determining the reference orders of the first and second reference lists, based on whether reference images determined for the current image include only reference images for a uni-directional prediction in addition to an I-slice type, a P-slice type, and a B-slice type; and if the reference images for the current image in the new slice type include the reference images for the uni-directional prediction, determining the reference orders of the first and second reference lists to be same based on the slice type information.

According to another aspect of the present invention, there is provided a video prediction apparatus including: a reference information determiner for determining reference information indicating at least one reference image for inter predicting an image; a reference list determiner for determining a first reference list and a second reference list, which each include the reference information and a reference order of the at least one reference images; a reconstructed image generator for generating, if the determined reference information indicates only images for a temporal uni-directional prediction, a reconstructed image by referring to images indicated by the first and second reference lists in a same reference order; and a processor for controlling operations of the reference information determiner, the reference list determiner, and the reconstructed image generator.

According to another aspect of the present invention, there is provided a video prediction encoding apparatus including: a predictor for determining reference information indicating at least one reference image by predicting an image; a reconstructed image generator for determining a first reference list and a second reference list, which each comprise the reference information and a reference order of the at least one reference image, and if the determined reference information indicates only images for uni-directional prediction, generating a reconstructed image by referring to images indicated by the first and second lists in a same reference order; a prediction encoder for encoding the reference information and a prediction error; and a processor for controlling operations of the predictor, the reference list determiner, the reconstructed image generator, and the prediction encoder.

According to another aspect of the present invention, there is provided a video prediction decoding apparatus including: a reception extractor for extracting a prediction error and reference information indicating at least one reference image for inter predicting an image by parsing a received bitstream; a reference list determiner for determining a first reference list and a second reference list, which each include the reference information and a reference order of the at least one reference image; a reconstructed image generator for, if the determined reference information indicates only images for uni-directional prediction, generating a reconstructed image by referring to images indicated by the first and second lists in a same reference order; and a processor for controlling operations of the reception extractor, the reference list determiner, and the reconstructed image generator.

According to another aspect of the present invention, there is provided a computer-readable recording medium having recorded thereon a program for executing the video prediction method.

According to another aspect of the present invention, there is provided a computer-readable recording medium having recorded thereon a program for executing the video prediction encoding method.

According to another aspect of the present invention, there is provided a computer-readable recording medium having recorded thereon a program for executing the video prediction decoding method.

Mode for Invention

Hereinafter, the present invention will be described more fully with reference to the accompanying drawings, in which exemplary embodiments of the invention are shown.

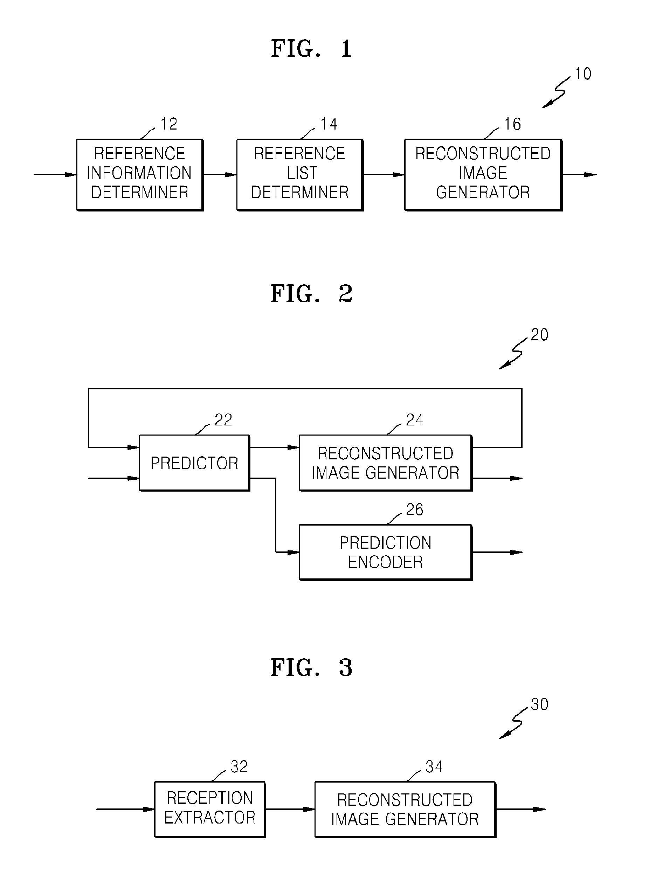

FIG. 1 is a block diagram of a video prediction apparatus 10 according to an embodiment of the present invention.

The video prediction apparatus includes a reference information determiner 12, a reference list determiner 14, and a reconstructed image generator 16.

The video prediction apparatus 100 may also include a central processor (not shown) for controlling the reference information determiner 12, the reference list determiner 14, and the reconstructed image generator 16. Alternatively, the reference information determiner 12, the reference list determiner 14, and the reconstructed image generator 16 may be operated by individual processors (not shown), and the video prediction apparatus 100 may operate as the individual processors mutually operate with each other. Alternatively, the reference information determiner 12, the reference list determiner 14, and the reconstructed image generator 16 may be controlled according to a control of an external processor (not shown) of the video prediction apparatus 10.

The video prediction apparatus 10 may further include at least one data storage unit (not shown) in which input and output data of the reference information determiner 12, the reference list determiner 14, and the reconstructed image generator 16 is stored. The video prediction apparatus 10 may further include a memory controller (not shown) for managing data input and output of the at least one data storage unit.

The video prediction apparatus 10 may perform a prediction on images of a video. The video prediction apparatus 10 may determine prediction information indicating a temporal distance or spatial distance between a current image and an adjacent image, and a prediction error. Accordingly, image information may be recorded by using the prediction information instead of entire data of an image.

Prediction encoding may include an inter prediction for a current image by using temporally pre-and post-images, and an intra prediction for a current image by using a spatially adjacent image. Accordingly, the temporally pre- and post-images are used as reference images in the inter prediction, and the spatially adjacent images are used as reference images in the intra prediction, so as to perform inter prediction on the current image. A reference image may be an image unit, such as a picture, a frame, and a block.

The reference information determiner 12 may determine reference information indicating at least one reference image for inter predicting an image. The reference information determiner 12 may determine similarity between a current image and previous and following images of the current image, and detect an image having the least error with the current image. The detected image is determined as a reference image, and information indicating the reference image, for example, a number or an index of the image, may be determined as reference information. Motion information indicating a reference block in the reference image may also be determined as reference information. For the intra prediction, an index indicating a reference image from among adjacent regions adjacent to a current region in an image same as the current image may be determined as reference information.

The reference information determiner 12 may determine a prediction error that is an error between the current image and the reference image.

The reference list determiner 14 may determine a reference list including the reference information determined in the reference information determiner 12, and a reference order of reference images.

The reference list may include a first reference list and a second reference list. For example, a reference list for inter prediction of an image in the B-slice type may include an L0 list for List0 prediction and an L1 list for List 1 prediction. The first and second reference lists may each include an index indicating at least one reference image, and information indicating a reference order.

When reference images for a bi-directional prediction are determined by the reference information determiner 12, the reference list determiner 14 may determine the first and second reference lists including a reference image for a first directional prediction and a reference image for a second directional prediction. For example, the reference image for the first directional prediction may be included in the first reference list and the reference image for the second directional prediction may be included in the second reference list. However, a reference list is not limited to include only a reference image for single-direction prediction.

The reference list determiner 14 may determine the reference orders of the reference images in the first and second reference lists. For example, the reference order may be determined such that a reference image temporally closer to the current image is referred to first.

When the reference information for inter prediction of the current image indicates only reference images for a temporal uni-directional prediction, the reference list determiner 14 may determine the reference orders of the first and second reference lists to be the same.

For example, when reference images of a current image in the B-slice type include only images temporally prior to the current image in the B-slice type based on determining the reference images of the current image in the B-slice type from among I-, P-, and B-slice types by the reference information determiner 12, the reference list determiner 14 may determine reference orders of the L0 list and the L1 list to be the same.

In order to determine the reference orders of the first and second reference lists to be the same, the reference list determiner 14 may determine the first and second reference lists such that numbers of the reference images included in the first and second reference lists to be the same, and an image indicated by a reference index included in the first reference list and an image indicated by a reference index included in the second reference list to be the same.

The reconstructed image generator 16 generates a reconstructed image from the prediction error of the current image by referring to the reference images of the first and second reference lists in a corresponding reference order.

When the second reference list does not include a reference image, the reconstructed image generator 16 may modify the second reference list to have reference information and a reference order identical to the first reference list. Then, the reconstructed image generator 16 may generate the reconstructed image by referring to same images indicated by the first and second reference lists in the same reference order.

For example, when there is no reference image to be included in the L1 list from among reference images determined for the current image in B-slice type, the reference information determiner 12 may configure the L0 list and the L1 list to be the same, and the reconstructed image generator 16 may reconstruct a prediction image by referring to same images indicated by the L0 list and the L1 list in the same reference order.

Since a video prediction technique may express an image by using prediction information instead of entire data of an image, reference information and prediction information of a prediction error may be recorded or transmitted, and an image may be reconstructed by performing a video prediction by using the prediction information that is externally obtained. A video prediction encoding apparatus 20 and a video prediction decoding apparatus 30 based on a video inter prediction, according to embodiments of the present invention, will now be described with reference to FIGS. 2 and 3.

FIG. 2 is a block diagram of a video prediction encoding apparatus 20 according to an embodiment of the present invention.

The video prediction encoding apparatus 20 may include a predictor 22, a reconstructed image generator 24, and a prediction encoder 26.

The predictor 22 may determine reference information indicating at least one reference image by performing inter prediction on an image. The predictor 22 may determine a prediction error between a current image and a reference image by performing inter prediction on the current image.

The reconstructed image generator 24 may determine a first reference list and a second reference list including the reference information determined by the predictor 22 and reference orders of reference images. The reconstructed image generator 24 may generate a reconstructed image by referring to the reference images indicated by the first and second reference lists according to the reference orders indicated by the first and second reference lists. When reference information indicates only images for a uni-directional prediction, the reconstructed image generator 24 may generate the reconstructed image by referring to images indicated by the first and second reference lists in the same reference order.

Operations of the reconstructed image generator 24 may correspond to operations of the reference list determiner 14 and the reconstructed image generator 16 of the video prediction apparatus 10 described above. For example, when reference information determined for a current image capable of bi-directional prediction indicates only temporally proceeding reference images, the reconstructed image generator 24 may determine the reference orders of the first and second reference lists to be the same. Accordingly, the reconstructed image generator 24 may generate the reconstructed image from the prediction error by referring to the reference images indicated by the first and second reference lists in an order same as the reference order of the first reference list.

The reconstructed image generated by the reconstructed image generator 24 may be used as a reference image for inter predicting another image in the predictor 22.

The prediction encoder 26 encodes the reference information and the prediction error determined by the predictor 22.

When reference information determined for a current image in the B-slice type indicates only reference images for a uni-directional prediction, the prediction encoder 26 may encode uni-directional prediction information indicating whether the reference orders of the first and second reference lists are the same.

Reference orders may be determined by an L0 list and an L1 list according to prediction directions of the B-slice type. For example, when only a forward prediction is performed by referring to temporally proceeding images for a first B-slice type image, the reference orders of the L0 list and the L1 list may be determined to be the same so that the temporally proceeding images indicated by the L0 list and the L1 list are referred to in the same reference order. When only a forward prediction is performed by referring to temporally proceeding images for a second B-slice type image, the reference orders of the L0 list and the L1 list may be determined to be different so that the temporally proceeding images indicated by the L0 list and the L1 list are referred to in the different reference orders.

When temporally proceeding images are referred to with respect to a current image in B-slice type, the prediction encoder 26 may encode uni-directional prediction information indicating whether a current image is a first B-slice type or a second B-slice type. The uni-directional prediction information may be encoded in a flag form.

The prediction encoder 26 may encode the uni-directional prediction information according to at least one image unit. For example, the prediction encoder 26 may signal uni-directional prediction flag information according to slices through a slice header, according to sequences through a sequence parameter set, or according to pictures through a picture parameter set. Accordingly, it may be determined and signaled whether an image in the B-slice type is to be encoded in a first B-slice type prediction mode or a second B-slice type prediction mode, according to slices, sequences, or pictures.

In other words, when an image in the B-slice type has only temporally proceeding reference images according to slices, sequences, or pictures, it may be determined whether to form first and second reference lists of the image in the B-slice type to be the same.

A fourth slice type may be defined in addition to I-, P-, and B-slice types. When only reference images for prediction in one direction are included, a fourth slice type image may be encoded according to a prediction mode in which first and second reference lists are set to be the same. The reconstructed image generator 16 may encode slice type information indicating one of I-, P-, B-, and fourth slice types.

In the video prediction encoding apparatus 20, the predictor 22, the reconstructed image generator 24, and the prediction encoder 26 may be controlled by a central processor (not shown), an external processor (not shown), or individual processors (not shown).

The video prediction encoding apparatus 20 may include at least one data storage unit (not shown) for storing input and output data of the predictor 22, the reconstructed image generator 24, and the prediction encoder 26. The video prediction encoding apparatus 20 may include a memory controller (not shown) for managing data input and output of the data storage unit.

Since the video prediction encoding apparatus 20 may express an image by using prediction information instead of entire data of an image, the video prediction encoding apparatus 20 may be applied to a video encoder where video compression encoding that requires reduction of a video data quantity is performed.

The video prediction encoding apparatus 20 may perform prediction encoding for encoding a video, by being included in or in connection with a video encoder for encoding a video based on coding units obtained by splitting an image of the video according to spatial domains.

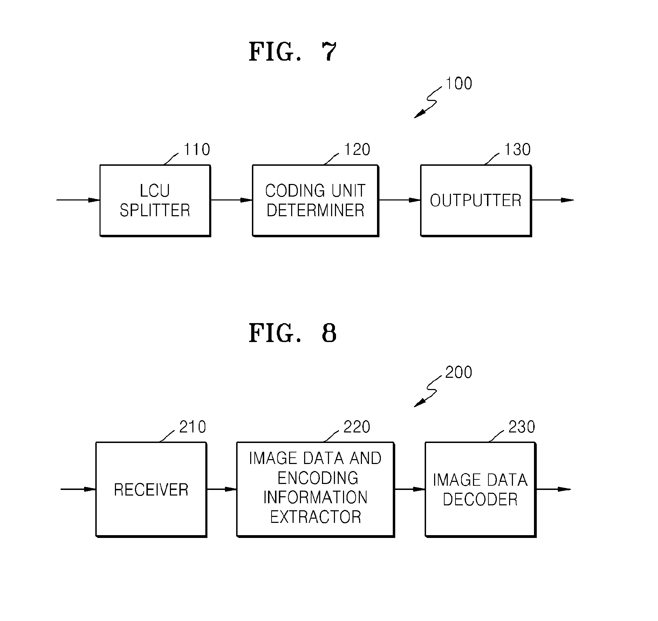

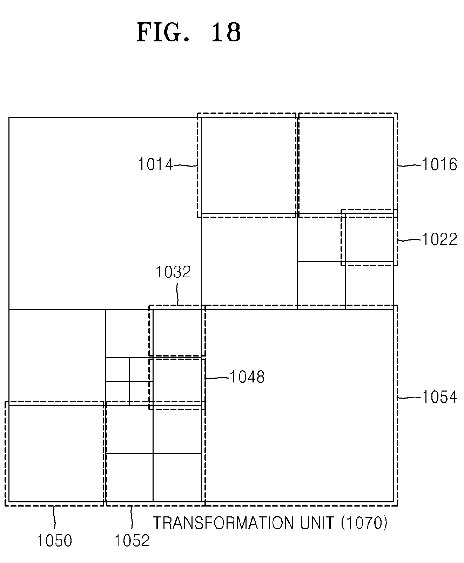

Coding units may not only include a macroblock having a fixedly determined shape, but also coding units having a tree structure. The coding units having a tree structure will be described later with reference to FIGS. 7 through 19.

The video prediction encoding apparatus 20 may output a prediction error, i.e., a residual component, of a reference image by performing a prediction on an image in a spatial domain. A video encoder may generate a quantized transformation coefficient by performing transformation and quantization on the residual component, and output a bitstream by performing entropy encoding on symbols, such as the quantized transformation coefficient and encoding information. The video encoder may reconstruct the image in the spatial domain by performing dequantization, inverse transformation, and prediction compensation on the quantized transformation coefficient to perform loop filtering. Accordingly, compression encoding of the video encoder may be realized through prediction encoding of the video prediction encoding apparatus 20.

The video prediction encoding apparatus 20 may perform a video encoding operation including prediction encoding by operating in connection with an internal video encoding processor mounted therein or an external video encoding processor, in order to output a video encoding result. The internal video encoding processor of the video prediction apparatus 10 may perform basic video encoding processes as not only an individual processor, but also the video prediction apparatus 10, a central processing apparatus, or a graphic operation apparatus include a video encoding processing module.

FIG. 3 is a block diagram of a video prediction decoding apparatus 30 according to an embodiment of the present invention.

The video prediction decoding apparatus 30 may include a reception extractor 32 and a reconstructed image generator 34.

The reception extractor 32 may extract reference information indicating at least one reference image for inter predicting an image, and prediction information including a prediction error, by parsing a received bitstream. The reception extractor 32 may determine reference information and a prediction error between a current image and a reference image based on the extracted prediction information.

The reconstructed image generator 34 determines first and second reference lists including the reference information determined by the reception extractor 32, and reference orders of reference images. The reconstructed image generator 34 may generate a reconstructed image by referring to reference images indicated by the first and second reference lists according to the reference orders indicated by the first and second reference lists. When the reference information indicate only images for a temporal uni-directional prediction, the reconstructed image generator 34 may generate the reconstructed image by referring to images indicated by the first and second reference lists in the same reference order.

Operations of the reconstructed image generator 34 correspond to operations of the reference list determiner 14 and the reconstructed image generator 16 of the video prediction apparatus 10 described above. For example, when reference information determined for a current image capable of a bi-directional prediction indicates only temporally proceeding reference images, the reconstructed image generator 24 may determine the reference orders of the first and second reference lists to be the same, and generate the reconstructed image from the prediction error by referring to reference images indicated by the first and second reference lists in an order same as the reference order of the first reference list.

The reconstructed image generated by the reconstructed image generator 34 may be output as a result image of prediction decoding. Also, the reconstructed image may be used as a reference image for inter predicting another image.

When reference information determined for a current image in the B-slice type indicates only reference images for a uni-directional prediction, the reception extractor 32 may receive uni-directional prediction information indicating whether the reference orders of the first and second reference lists are the same.

For example, when temporally proceeding images are referred to with respect to a current image in B-slice type, the reception extractor 32 may receive uni-directional prediction information indicating whether a current image is a first B-slice type or a second B-slice type. The uni-directional prediction information may be encoded in a flag form.

When it is determined that the current image is the first B-slice type based on the uni-directional prediction information, the reconstructed image generator 34 may refer to temporally proceeding images indicated by an L0 list and an L1 list according to the same order, if reference images of an image in the B-slice type include only the temporally proceeding images. When it is determined that the current image is the second B-slice type based on the uni-directional prediction information, the reconstructed image generator 34 may refer to temporally proceeding images indicated by an L0 list and an L1 list according to different orders, if reference images of an image in the B-slice type include only the temporally proceeding images.

The reception extractor 32 may receive the uni-directional prediction information according to at least one image unit. For example, the reception extractor 32 may receive the uni-directional prediction information according to slices through a slice header, according to sequences through a sequence parameter set, or according to pictures through a picture parameter set. Accordingly, it may be determined whether an image in the B-slice type is to be decoded in a first B-slice type prediction mode or a second B-slice type prediction mode, according to slices, sequences, or pictures.

The reception extractor 32 may receive slice type information indicating one of I-, P-, B-, and fourth slice types. When it is determined that a current image is the fourth slice type, instead of an I-, P-, or B-slice type based on the slice type information, the reconstructed image generator 34 may decode the current image according to a prediction mode wherein first and second reference lists are identically set, if at least one reference image determined for the current image include reference images for prediction in one direction.

Also in the video prediction decoding apparatus 30, the reception extractor 32 and the reconstructed image generator 34 may be controlled by a central processor (not shown), an external processor (not shown), or individual processors (not shown).

The video prediction decoding apparatus 30 may include at least one data storage unit (not shown) for storing input and output data of the reception extractor 32 and the reconstructed image generator 34. The video prediction decoding apparatus 30 may include a memory controller (not shown) for managing data input and output of the data storage unit.

Since the video prediction decoding apparatus 30 may reconstruct an image by using prediction information instead of entire data of an image, the video prediction decoding apparatus 30 may be applied to a video decoder where video compression encoding that requires reduction of a video data quantity is performed.

The video prediction decoding apparatus 30 may perform prediction encoding for decoding a video, by being included in or in connection with a video encoder for encoding a video based on coding units obtained by splitting an image of the video according to spatial domains.

Coding units may not include only a macroblock having a fixedly determined shape, but also coding units having a tree structure. The coding units having a tree structure will be described later with reference to FIGS. 7 through 19.

The video prediction decoding apparatus 30 may extract encoding symbols by parsing a bitstream. A prediction error on a reference image may be reconstructed by performing entropy decoding, inverse quantization, and inverse transformation on the encoding symbols. An image in a spatial domain may be reconstructed through prediction compensation using the prediction error and the reference information, and loop filtering may be performed on the reconstructed image. Accordingly, compression decoding of the video decoder may be realized through prediction decoding of the video prediction decoding apparatus 30.

The video prediction decoding apparatus 30 may perform a video decoding operation including prediction by operating in connection with an internal video decoding processor mounted therein or an external video decoding processor, in order to output a video decoding result. The internal video decoding processor of the video prediction decoding apparatus 30 may perform basic video decoding processes as not only an individual processor, but also the video prediction decoding apparatus 30, a central processing apparatus, or a graphic operation apparatus include a video decoding processing module.

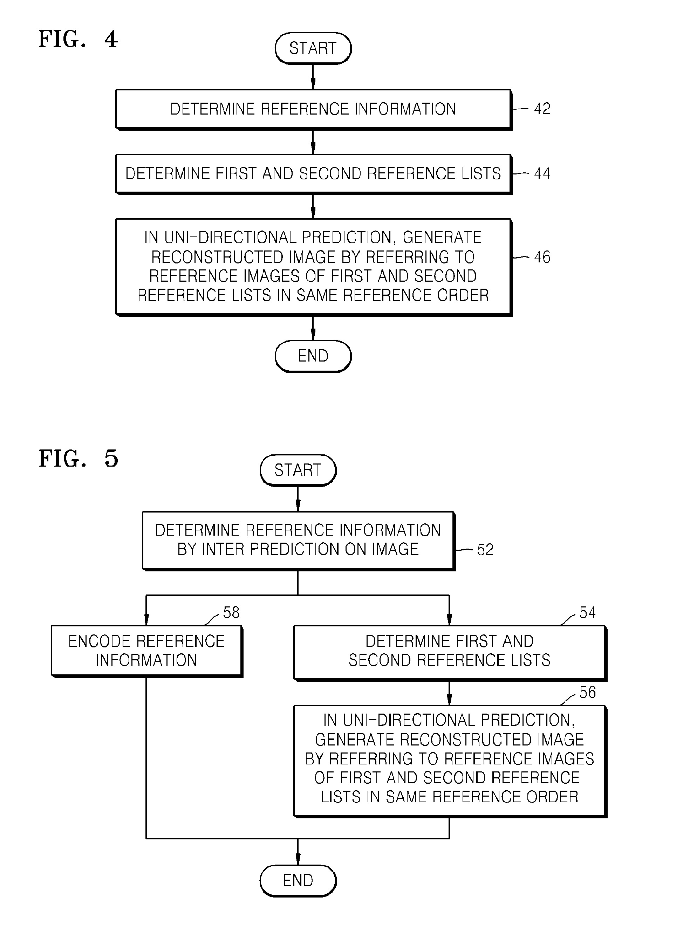

FIG. 4 is a flowchart illustrating a video prediction method according to an embodiment of the present invention.

In operation 42, reference information indicating at least one reference image for inter predicting an image is determined. A prediction error between a current image and a reference image may also be determined.

In operation 44, first and second reference lists including the reference information determined in operation 42, and reference orders of reference images are determined.

When reference images for a bi-directional prediction are determined, the first reference list including reference image indices and a reference order for a first directional prediction, and the second reference list including reference image indices and a reference order for a second directional prediction may be determined.

When reference information for inter predicting a current image indicates only reference images for a temporal uni-directional prediction, the reference orders of the first and second reference lists may be determined to be the same.

For example, a prediction mode referring to only temporally proceeding images may exist. In order to reduce a delay that may occur during a prediction, a prediction mode allowing only a forward prediction may be set. Here, only temporally proceeding reference images may be determined for a current image in B-slice type, and the reference orders of the first and second reference lists may be determined to be the same.

In operation 46, a reconstructed image may be generated from the prediction error by referring to the reference images indicated by the first and second reference lists in the reference orders.

When the second reference list does not include a reference image, the second reference list may be determined again to include the same reference images and the same reference order as the first reference list, and the reconstructed image may be generated by referring to the same reference images indicated by the first and second reference lists in the same reference order.

FIG. 5 is a flowchart illustrating a video prediction encoding method according to an embodiment of the present invention.

In operation 52, reference information indicating at least one reference image is determined by predicting an image. A prediction error between a current image and a reference image may also be determined by predicting a current image.

In operation 54, first and second reference lists including the reference information determined in operation 52 and reference orders of reference images are determined.

In operation 56, a reconstructed image may be generated by referring to the reference images indicated by the first and second reference lists determined in operation 54 in the reference orders indicated by the first and second reference lists. When reference information indicates only images for a uni-directional prediction, the reference orders of the first and second reference lists may be revised to be the same so as to generate the reconstructed image from the prediction error by referring to the reference images indicated by the first and second reference lists in the same reference order.

In operation 58, the reference information and the prediction error are encoded.

When only temporally proceeding images are referred to with respect to a current image in B-slice type, uni-directional prediction information indicating whether a current image is in a first B-slice type or a second B-slice type may be encoded. The uni-directional prediction information may be signaled through a slice header, a sequence parameter set, or a picture parameter set.

Alternatively, slice type information indicating one of I-, P-, B-, and fourth slice types may be encoded.

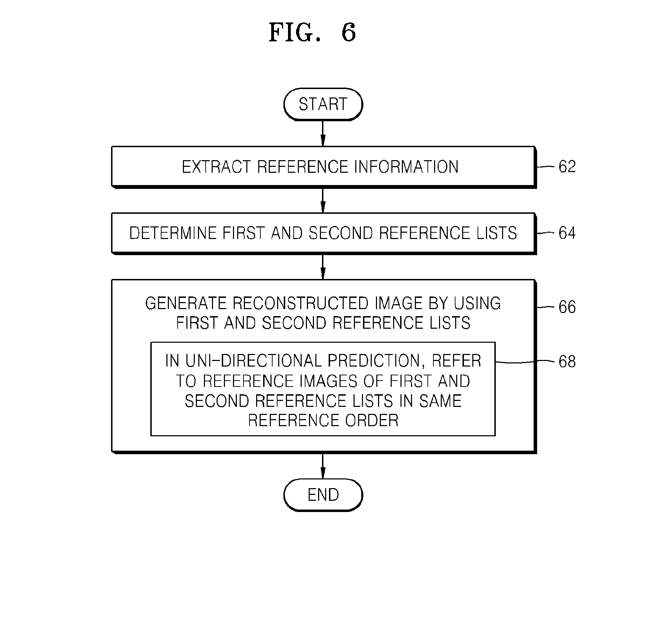

FIG. 6 is a flowchart illustrating a video prediction decoding method according to an embodiment of the present invention.

In operation 62, reference information indicating at least one reference image for inter predicting an image, and a prediction error are extracted by parsing a received bitstream.

In operation 64, first and second reference lists including the reference information determined in operation 62, and reference orders of reference images are determined.

In operation 66, a reconstructed image may be generated by referring to the reference images indicated by the first and second reference lists determined in operation 64 in the reference orders indicated by the first and second reference lists. In operation 68, when the reference information indicates only images for a temporal uni-directional prediction, the reconstructed image may be generated by referring to images indicated by the first and second reference lists in the same reference order.

In operation 62, when reference information determined for a current image in the B-slice type indicates only reference images for a uni-directional prediction, uni-directional prediction information indicating whether the reference orders of the first and second reference lists are the same may be received. The uni-directional prediction information may be received according to slices, sequences, or pictures.

When it is determined that a current image is a first B-slice type based on the uni-directional prediction information received in operation 62, and reference images include only temporally proceeding images, the reconstructed image may be generated by referring to the temporally proceeding images indicated by an L0 list and an L1 list according to the same reference order in operation 66.

In operation 62, slice type information indicating one of I-, P-, B-, and fourth slice types may be received. When it is determined that a current image is a fourth slice type based on the slice type information, and at least one reference image determined for the current image includes only at least one reference image for an inter prediction in one direction, a reference image is determined according to a prediction mode wherein the first and second reference lists are set to be the same in operation 64, and an image may be reconstructed through prediction and compensation.

Accordingly, when reference information indicates only reference images for a uni-directional prediction or only temporally proceeding reference images are usable, the reference orders of the first and second reference lists are determined to be the same, and thus even when reference images are determined according to the first and second reference lists, prediction may be performed according to an order of temporally close reference images or similar reference images. Also, even when the reconstructed image is generated by referring to the same reference images of the first and second reference lists in the same reference order, the quality of the reconstructed image may be increased by combining prediction results.

Expanding and applying of video encoding and decoding capable of bi- and uni-directional predictions to video encoding and decoding based on coding units having a tree structure will now be described with reference to FIGS. 7 through 21.

FIG. 7 is a block diagram of a video encoding apparatus 100 using prediction based on coding units according to a tree structure, according to an embodiment of the present invention.

The video encoding apparatus 100 includes a maximum coding unit splitter 110, a coding unit determiner 120, and an output unit 130.

The maximum coding unit splitter 110 may split a current picture based on a maximum coding unit for the current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment of the present invention may be characterized by a maximum size and a depth. The depth denotes a number of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. Thus, the encoded image data of the coding unit corresponding to the determined coded depth is finally output. Also, the coding units corresponding to the coded depth may be regarded as encoded coding units. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to same depth in one maximum coding unit, it is determined whether to split each of the coding units corresponding to the same depth to a lower depth by measuring an encoding error of the image data of the each coding unit, separately. Accordingly, even when image data is included in one maximum coding unit, the image data is split to regions according to the depths and the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of splitting times from a maximum coding unit to a minimum coding unit. A first maximum depth according to an embodiment of the present invention may denote the total number of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. The partition may be a data unit in which a prediction unit of a coding unit is split, and the prediction unit may be a partition having a same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a transformation unit having a size smaller than or equal to the coding unit. For example, the transformation unit may include a data unit for an intra mode and a transformation unit for an inter mode.

Similarly to the coding unit, the transformation unit in the coding unit may be recursively split into smaller sized regions, so that the transformation unit may be determined independently in units of regions. Thus, residual data in the coding unit may be divided according to the transformation having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is also 2Nx2N, may be 1 when the size of the transformation unit is thus NxN, and may be 2 when the size of the transformation unit is thus N/2xN/2. In other words, the transformation units according to a tree structure may be set for the transformation units according to a transformation depth.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

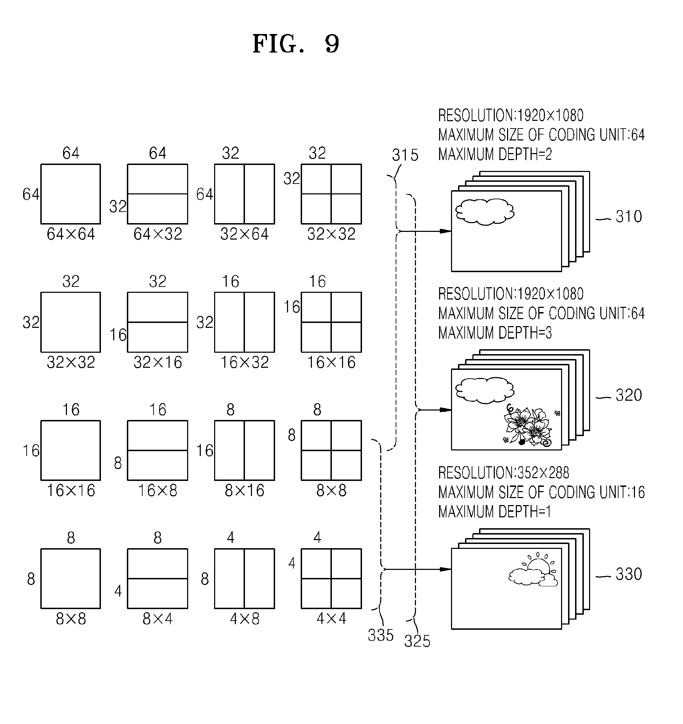

Coding units according to a tree structure in a maximum coding unit, prediction units/partitions, and a method of determining a transformation unit, according to embodiments of the present invention, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a rectangular data unit obtained by splitting the minimum coding unit constituting the lowermost depth by 4. Alternatively, the minimum unit may be a maximum rectangular data unit that may be included in all of the coding units, prediction units, partition units, and transformation units included in the maximum coding unit.

For example, the encoding information output through the output unit 130 may be classified into encoding information according to coding units, and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Also, information about a maximum size and a minimum size of the transformation unit allowed with respect to a current video may be output through a header of a bitstream, a sequence parameter set, or a picture parameter set. The output unit 130 may encode and output reference information related to prediction, prediction information, uni-directional prediction information, and slice type information including a fourth slice type, which have been described above with reference to FIGS. 1 through 6.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include maximum 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having high resolution or large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 100 of FIG. 7 may perform a prediction encoding operation of the video prediction encoding apparatus 20 described above with reference to FIG. 2.

The coding unit determiner 120 may perform operations of the predictor 22 and the reconstructed image generator 24 of the video prediction encoding apparatus 10. In other words, predicting and compensating operations of the predictor 22 and the reconstructed image generator 24 may be performed based on partitions included in each coding unit, from among coding units having a hierarchical structure obtained by splitting a current image. A reference image may be determined based on a first reference list and a second reference list for a B-slice type partition.

As described above with reference to FIGS. 1 and 2, the coding unit determiner 120 may generate a reconstructed region of a current partition by referring to reference images for a uni-directional prediction indicated by the first and second reference lists in the same reference order. The coding unit determiner 120 may reconstruct a prediction region of the current partition by referring to reference images for a bi-directional prediction indicated by the first and second reference lists according to a corresponding reference order.

The coding unit determiner 120 may select coding units having a coded depth and partitions for outputting an encoding result having the least error, based on results of comparing encoding errors according to depths, wherein the encoding errors are generated by performing inter prediction including a bi- or uni-directional prediction and performing an encoding process including transformation and quantization on a prediction error, according to deeper coding units of each maximum coding unit of a current image.

As described above, a bi- or uni-directional prediction according to an embodiment of the present invention is performed by using the reference images according to the reference orders in the first and second reference lists. In particular, when a forward prediction is performed by using reference images temporally prior to a current image for a current partition in a slice type capable of a bi- or uni-directional prediction, the coding unit determiner 120 may determine the reference orders of the first and second reference lists to be the same. The coding unit determiner 120 may generate a reconstructed image of the current partition by referring to images indicated by the first and second reference lists in the same reference order. Coding units having a coded depth determined as such may form coding units having a tree structure.

The output unit 130 of the video encoding apparatus 100 may perform operations of the prediction encoder 26 of the video prediction encoding apparatus 20. In other words, the output unit 130 may output a quantized transformation coefficient of a prediction error generated via a bi- or uni-directional prediction according to coding units having a tree structure, according to each maximum coding unit.

The output unit 130 may encode and output information about coded depths and encoding modes of coding units having a tree structure. The information about the encoding modes may include reference information determined according to a bi- and uni-directional prediction, and prediction mode information. The reference information may include an index indicating a reference image, and motion information indicating a reference block.

The output unit 130 may encode bi-directional prediction information indicating whether first and second reference lists of an image in the B-slice type are the same, and slice type information including a fourth slice type, as prediction mode information about bi- and uni-directional prediction. The prediction mode information determined according to the bi- and uni-directional prediction may be encoded according to slices, sequences, or pictures including the current partition.

FIG. 8 is a block diagram of a video decoding apparatus 200 using prediction based on coding units according to a tree structure, according to an embodiment of the present invention.

The video decoding apparatus 200 includes a receiver 210, an image data and encoding information extractor 220, and an image data decoder 230.

Definitions of various terms, such as a coding unit, a depth, a prediction unit, a transformation unit, and information about various encoding modes, for various operations of the video decoding apparatus 200 are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. The predetermined data units to which the same information about the coded depth and the encoding mode is assigned may be inferred to be the data units included in the same maximum coding unit.

The image data decoder 230 may restore the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation. Inverse transformation may be performed according to method of inverse orthogonal transformation or inverse integer transformation.

The image data decoder 230 may perform intra prediction or motion compensation according to a partition and a prediction mode of each coding unit, based on the information about the partition type and the prediction mode of the prediction unit of the coding unit according to coded depths.

Also, the image data decoder 230 may perform inverse transformation based on transformation units in the coding unit by reading information about the transformation units having a tree structure according to coding units, so as to perform the inverse transformation according to maximum coding units. A pixel value in a spatial domain of the coding unit may be reconstructed through the inverse transformation.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded data of at least one coding unit corresponding to the each coded depth in the current maximum coding unit by using the information about the partition type of the prediction unit, the prediction mode, and the size of the transformation unit for each coding unit corresponding to the coded depth, and output the image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, information about the encoding mode may be obtained according to the coding units, and thus a current coding unit may be decoded.

The video decoding apparatus 200 of FIG. 8 may perform a prediction decoding process of the video prediction decoding apparatus 30 described above with reference to FIG. 3.

The receiver 210 and the image data and encoding information extractor 220 of the video decoding apparatus 200 may perform operations of the reception extractor 32 of the video prediction decoding apparatus 30.

The image data and encoding information extractor 220 may extract a quantized transformation coefficient of a prediction error generat4ed according to a bi- or uni-directional prediction, according to coding units having a tree structure, from a parsed bitstream.

The image data and encoding information extractor 220 may extract information about coded depths and encoding modes of coding units having a tree structure, while extracting prediction mode information determined according to bi- and uni-directional predictions, from a parsed bitstream. The image data and encoding information extractor 220 may extract uni-directional prediction information indicating whether first and second reference lists of an image in the B-slice type are the same, and slice type information including a fourth slice type. The prediction mode information determined according to the bi- and uni-directional predictions may be individually extracted according to slices, sequences, or pictures including a current partition.

The image data and encoding information extractor 220 may extract reference information indicating reference images and reference blocks for bi- and uni-directional predictions.

The image data decoder 230 of the video decoding apparatus 200 may perform operations of the reconstructed image generator 23 of the video prediction decoding apparatus 30.

The image data decoder 230 may determine coding units having a tree structure and determine partitions according to the coding units, by using information about coded depths and encoding modes. The image data decoder 230 may reconstruct a prediction error of a coding unit via a decoding process including inverse quantization and inverse transformation on encoded image data, according to coding unit having a tree structure of a current image.

The image data decoder 230 may perform bi- and uni-directional predictions on the prediction error, based on partitions included according to the coding units having a tree structure. Reference images may be determined based on first and second reference lists for a B-slice type partition. The image data decoder 230 may reconstruct a prediction region of a current partition by referring to reference images for a bi-directional prediction indicated by first and second reference lists according to a corresponding reference order.

In particular, as described above with reference to FIGS. 1 and 3, the image data decoder 230 may reconstruct a reconstructed region of a current partition by referring to reference images for a uni-directional prediction indicated by first and second reference lists according to the same reference order. For example, when a forward prediction is performed by using reference images temporally prior to a current image for the current image in a slice type capable of uni- and bi-directional predictions, the image data decoder 230 may determine reference orders of first and second reference lists to be the same, and reconstruct a partition by referring to images indicated by the first and second reference lists according to the same reference order.

Accordingly, the image data decoder 230 may generate a reconstructed image of a current image by performing prediction decoding according to partitions of coding units having a tree structure, according to each maximum coding unit.

As such, the video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded. Also, the maximum size of coding unit is determined considering resolution and an amount of image data.

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder.

FIG. 9 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 9 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

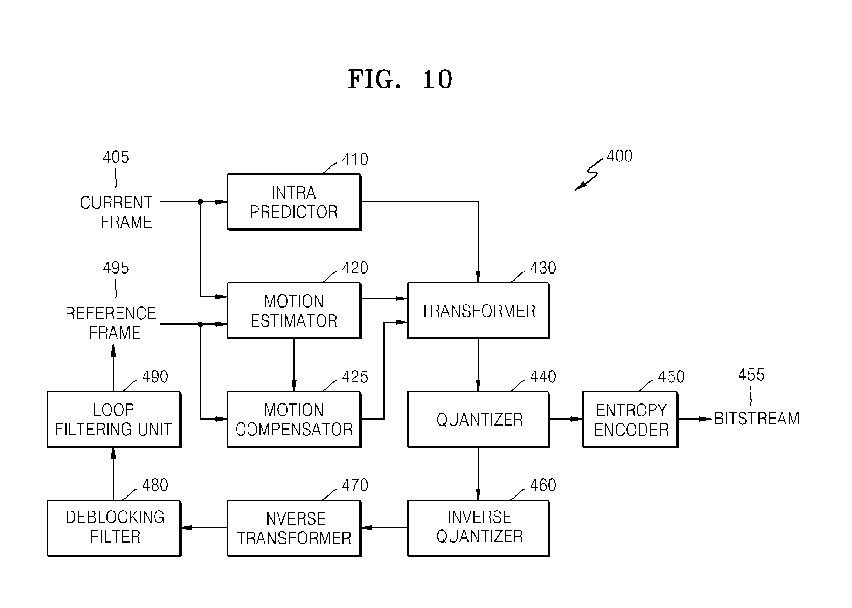

FIG. 10 is a block diagram of an image encoder 400 based on coding units according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in a spatial domain through an inverse quantizer 460 and an inverse transformer 470, and the reconstructed data in the spatial domain is output as the reference frame 495 after being post-processed through a deblocking unit 480 and a loop filtering unit 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

The motion compensator 425 may determine an L0 list and an L1 list in order to determine B-slice type reference images capable of a bi-directional prediction. When the B-slice type reference images include only temporally proceeding reference images, the motion compensator 425 may determine reference orders of first and second reference lists to be the same, and generate a reconstructed image by performing compensation on reference images indicated by the first and second reference lists in the same reference order.

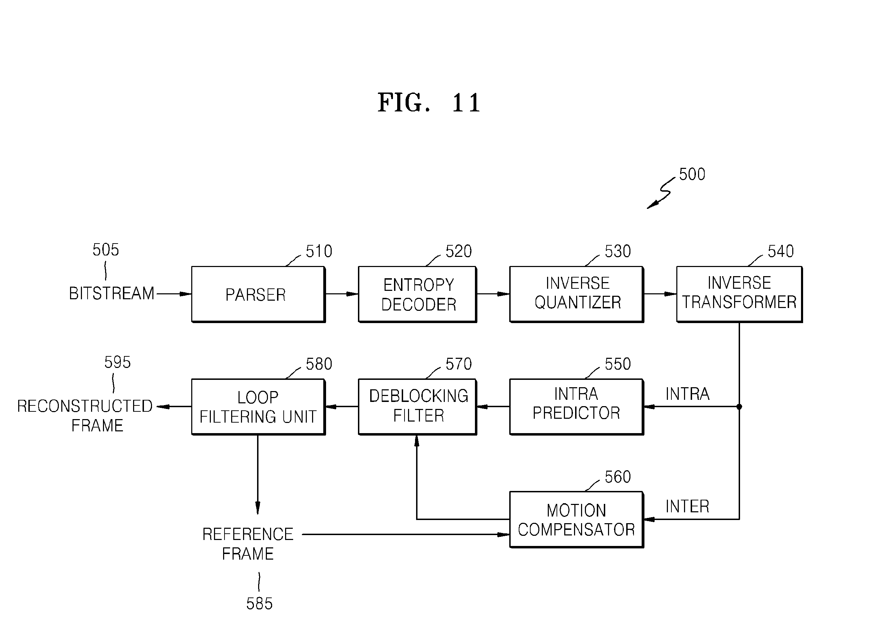

FIG. 11 is a block diagram of an image decoder 500 based on coding units according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a reconstructed frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

The motion compensator 560 may determine an L0 list and an L1 list in order to determine B-slice type reference images capable of a bi-directional prediction. When the B-slice type reference images include only temporally proceeding reference images, the motion compensator 560 may determine reference orders of first and second reference lists to be the same, and generate a reconstructed image by performing compensation on reference images indicated by the first and second reference lists in the same reference order.

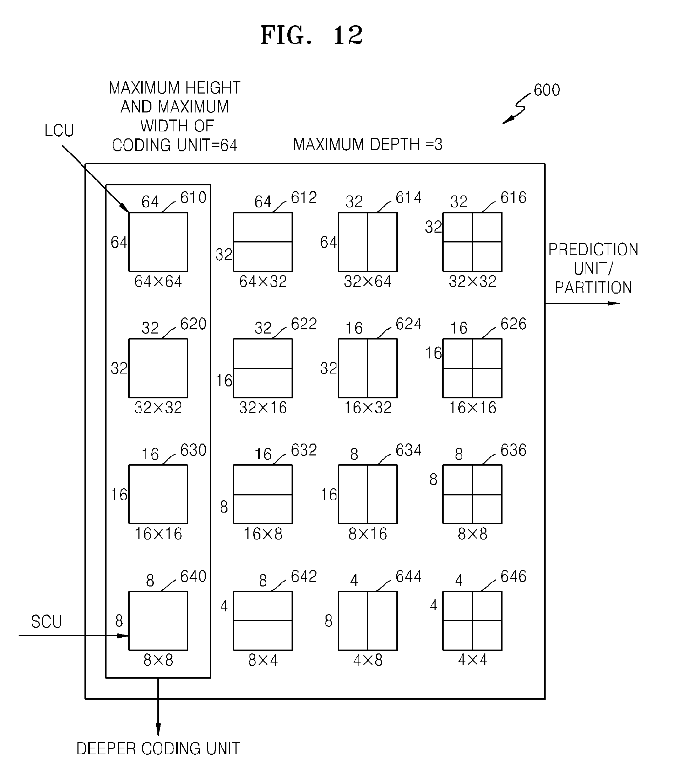

FIG. 12 is a diagram illustrating deeper coding units according to depths, and partitions according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment of the present invention, the maximum height and the maximum width of the coding units are each 64, and the maximum depth is 4. Here, the maximum depth denotes a total number of splits from a maximum coding unit to a minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, a coding unit 640 having a size of 8x8 and a depth of 3, and a coding unit 650 having a size of 4x4 and a depth of 4 exist. The coding unit 650 having the size of 4x4 and the depth of 4 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

The coding unit 650 having the size of 4x4 and the depth of 4 is the minimum coding unit and a coding unit of the lowermost depth. A prediction unit of the coding unit 650 is only assigned to a partition having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

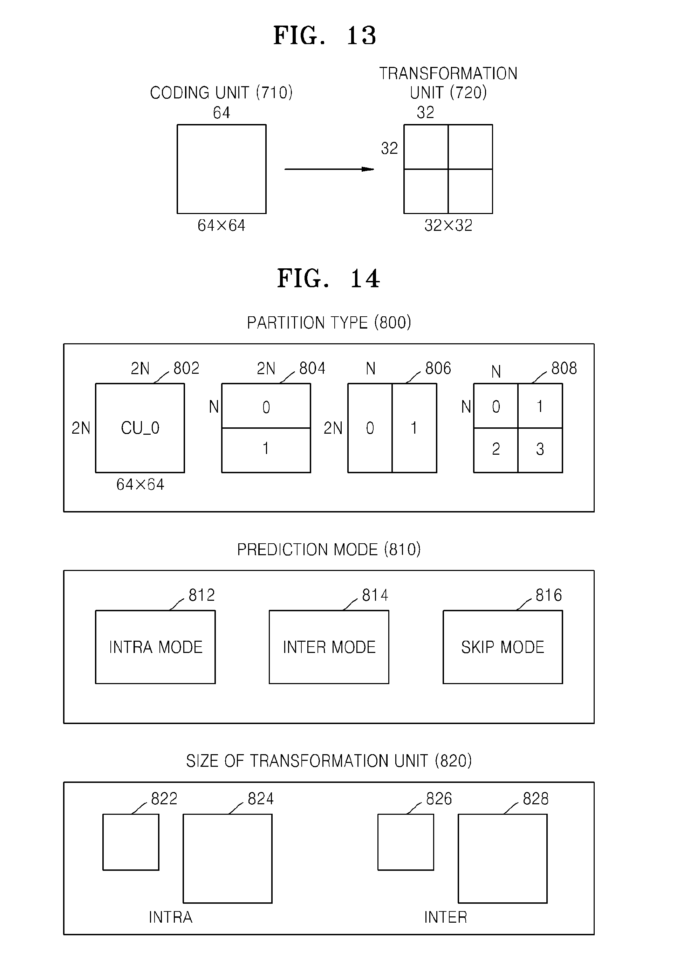

FIG. 13 is a diagram for describing a relationship between a coding unit 710 and transformation units 720, according to an embodiment of the present invention.

The video encoding or decoding apparatus 100 or 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding or decoding apparatus 100 or 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 14 is a diagram for describing encoding information of coding units corresponding to a coded depth, according to an embodiment of the present invention.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 220 of the video decoding apparatus 200 may extract and use the information 800, 810, and 820 for decoding, according to each deeper coding unit

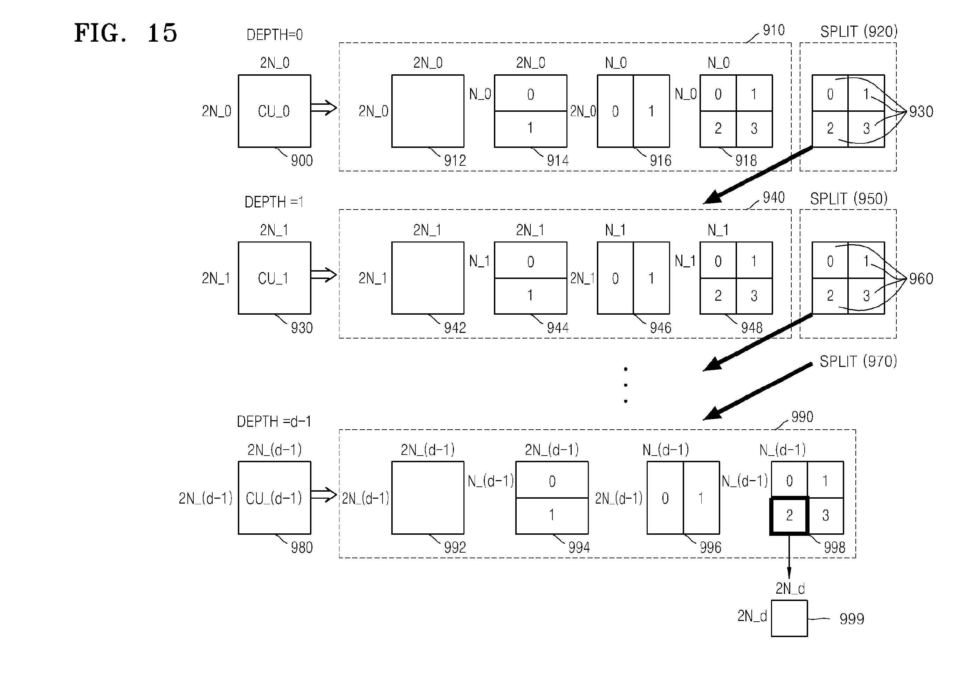

FIG. 15 is a diagram of deeper coding units according to depths, according to an embodiment of the present invention;

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 15 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

Errors of encoding including the prediction encoding in the partition types 912 through 918 are compared, and the least encoding error is determined among the partition types. If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, deeper coding units may be set up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a rectangular data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

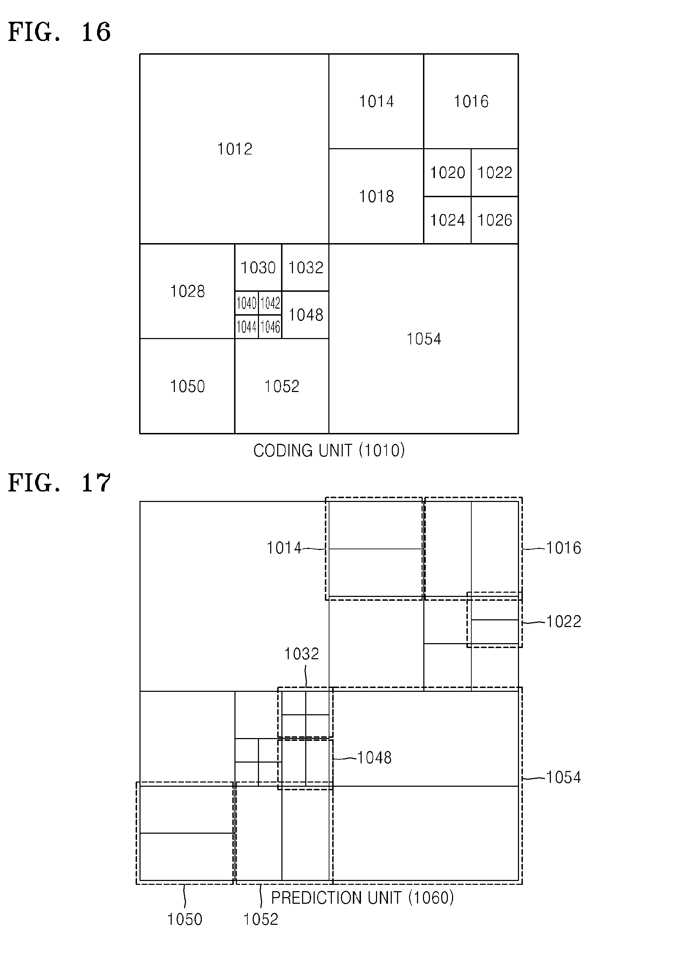

FIGS. 16 through 18 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra Inter | Symmetrical Partition Type | Asymmetrical Partition Type | Split Information 0 of Transformation Unit | Split Information 1 of Transformation Unit | Repeatedly Encode Coding Units having Lower Depth of d+1 |
| Skip (Only 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for inter predicting the current coding unit.

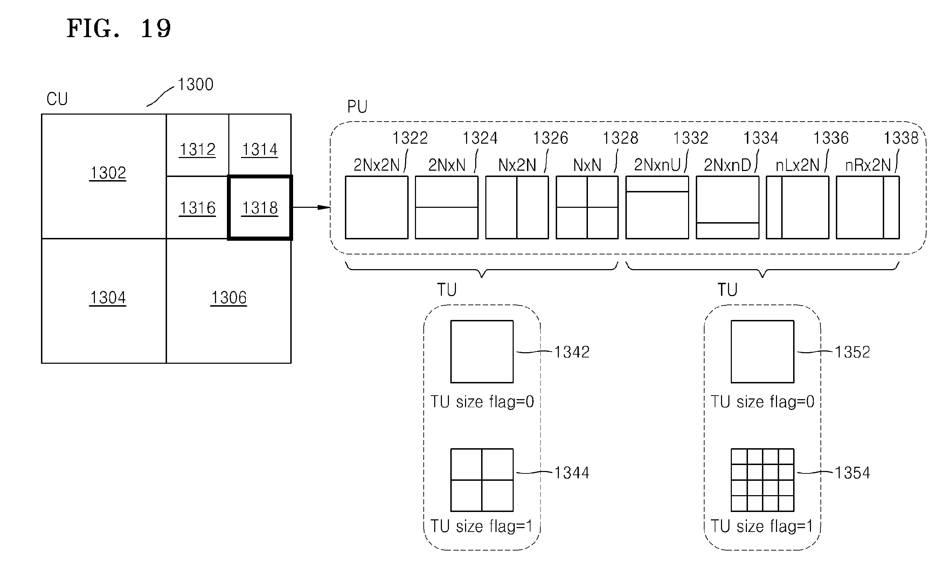

FIG. 19 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index, and a size of a transformation unit corresponding to a transformation index may vary according to a type of a prediction unit or partition of a coding unit.

For example, when the partition type is set to be symmetrical, i.e. the partition type 1322, 1324, 1326, or 1328, a transformation unit 1342 having a size of 2Nx2N is set if split information of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 19, the TU size flag is a flag having a value or 0 or 1, but the TU size flag is not limited to 1 bit, and a transformation unit may be hierarchically split having a tree structure while the TU size flag increases from 0. The TU size flag may be used as an example of a transformation index.

In this case, the size of a transformation unit that has been actually used may be expressed by using a TU size flag of a transformation unit, according to an embodiment of the present invention, together with a maximum size and minimum size of the transformation unit. According to an embodiment of the present invention, the video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. According to an embodiment of the present invention, the video decoding apparatus 200 may decode video by using the maximum transformation unit size information, the minimum transformation unit size information, and the maximum TU size flag.

For example, if the size of a current coding unit is 64x64 and a maximum transformation unit size is 32x32, then the size of a transformation unit may be 32x32 when a TU size flag is 0, may be 16x16 when the TU size flag is 1, and may be 8x8 when the TU size flag is 2.

As another example, if the size of the current coding unit is 32x32 and a minimum transformation unit size is 32x32, then the size of the transformation unit may be 32x32 when the TU size flag is 0. Here, the TU size flag cannot be set to a value other than 0, since the size of the transformation unit cannot be less than 32x32.

As another example, if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$CurrMinTuSize = max(MinTransformSize, RootTuSize/(2^{\wedge}MaxTransformSizeIndex)) \ ...(1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment of the present invention, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

*RootTuSize = min(MaxTransformSize, PUSize) ... (2)*

That is, if the current prediction mode is the inter mode, the transformation unit size 'RootTuSize' when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

*RootTuSize = min(MaxTransformSize, PartitionSize) ...(3)*

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

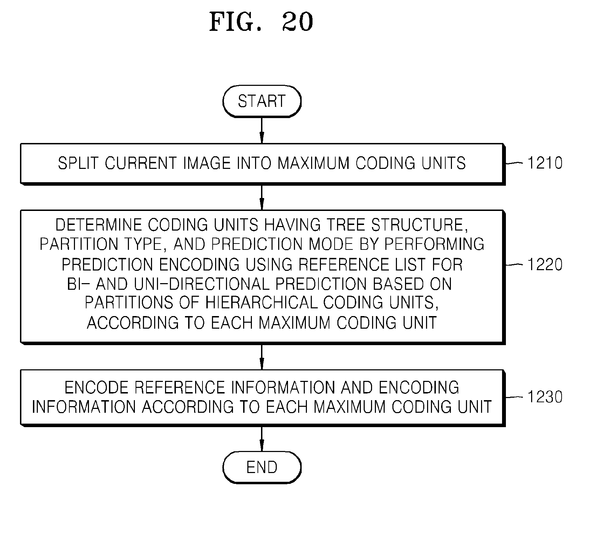

FIG. 20 is a flowchart illustrating a video encoding method using prediction based on coding units according to a tree structure, according to an embodiment of the present invention.

In operation 1210, a current image is split into at least one maximum coding unit. A maximum depth indicating the total number of possible splitting times may be predetermined.

In operation 1220, a coded depth to output a final encoding result according to at least one split region, which is obtained by splitting a region of each maximum coding unit according to depths, is determined by encoding the at least one split region, and a coding unit according to a tree structure is determined.

The maximum coding unit is spatially split whenever the depth deepens, and thus is split into coding units of a lower depth. Each coding unit may be split into coding units of another lower depth by being spatially split independently from adjacent coding units. Encoding is repeatedly performed on each coding unit according to depths.

Also, a prediction unit, a partition, and a transformation unit, which have the least encoding error are determined for each deeper coding unit. In order to determine a coded depth having a minimum encoding error in each maximum coding unit, an encoding error of a prediction error may be measured and compared.

While determining the coding units, prediction units and partitions for a prediction may be determined. The prediction units and partitions may be determined in a data unit that reduces an error according to prediction of the coding units. The partitions may be determined and reference images for the partitions may be determined, based on results of prediction according to the coding units.

Reference lists including reference image indices and reference orders may be determined for prediction compensation of a B-slice type partition capable of a bi-directional prediction. First and second reference lists may each include reference images for a predetermined directional prediction and a reference order of the reference images. However, if reference images for a current partition include only temporally proceeding images, the reference orders of the first and second reference lists may be determined to be the same. The reference images and the reference orders indicated by the first and second reference lists may be the same.

A reconstructed region of a partition may be generated based on the reference images indicated by the first and second reference lists, and the reference orders of the reference images.

Prediction encoding may be performed by using reference lists for a bi- or uni-directional prediction according to coding units, and a partition type and a prediction mode, which reduce an encoding error, may be determined. Accordingly, coding units having a tree structure, a partition type, and a prediction mode for outputting encoding results may be determined according to maximum coding units.

In operation 1230, encoded image data constituting the final encoding result according to the coded depth is output for each maximum coding unit, with encoding information about the coded depth and an encoding mode. The information about the encoding mode may include information about a coded depth or split information, information about a partition type of a prediction unit, a prediction mode, and a hierarchical structure of transformation units.

Reference information determined according to bi- and uni-directional predictions, and prediction mode information may be encoded as information about an encoding mode. The reference information may include an index indicating a reference image, and motion information. The reference information may include prediction mode information, uni-directional prediction information indicating whether first and second reference lists of an image in the B-slice type are the same, and slice type information including a fourth slice type.

The encoded information about the encoding mode may be transmitted to a decoding unit along with the encoded image data.

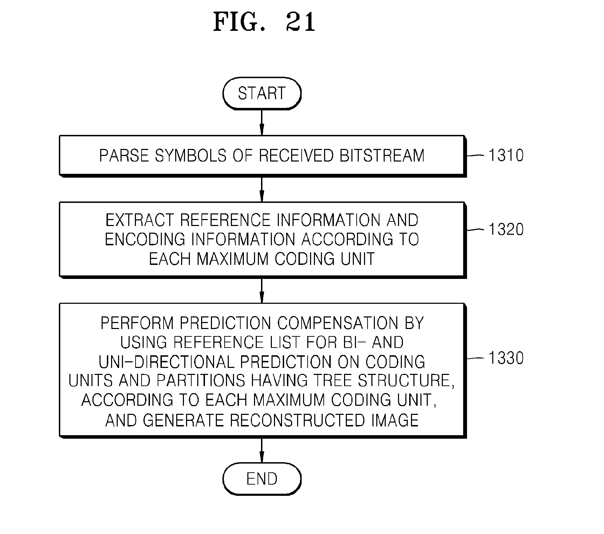

FIG. 21 is a flowchart illustrating a video decoding method using a inter prediction based on coding units according to a tree structure, according to an embodiment of the present invention.

In operation 1310, a bitstream of an encoded video is received and parsed.

In operation 1320, encoded image data of a current picture assigned to a maximum coding unit, and information about a coded depth and an encoding mode according to maximum coding units are extracted from the parsed bitstream. The coded depth of each maximum coding unit is a depth having the least encoding error in each maximum coding unit. In encoding each maximum coding unit, the image data is encoded based on at least one data unit obtained by hierarchically splitting the each maximum coding unit according to depths.

According to the information about the coded depth and the encoding mode, the maximum coding unit may be split into coding units having a tree structure. Each of the coding units having the tree structure is determined as a coding unit corresponding a coded depth, and is optimally encoded as to output the least encoding error. Accordingly, encoding and decoding efficiency of an image may be improved by decoding each piece of encoded image data in the coding units after determining at least one coded depth according to coding units.

Reference information and prediction mode information for bi- and uni-directional predictions may be extracted as information about an encoding mode. An index indicating a reference image and motion information may be extracted as the reference information for bi- and uni-directional predictions. Uni-directional prediction information indicating whether first and second reference lists of an image in the B-slice type are the same, and slice type information including a fourth slice type may be extracted as the prediction mode information for bi- and uni-directional predictions.

In operation 1330, the image data of each maximum coding unit is decoded based on the information about the coded depth and the encoding mode according to the maximum coding units. When a current coding unit is decoded based on information about coded depths and encoding modes, prediction units or partitions are determined based on partition type information and prediction modes are determined according to partitions based on prediction mode information, and thus prediction compensation may be performed according to partitions.

Reference lists including reference image indices and reference orders may be determined for prediction compensation of a B-slice type partition capable of a bi-directional prediction. A reconstructed region of a partition may be generated by referring to reference images indicated by first and second reference lists according to a corresponding reference order. However, when reference images for a current partition include only temporally proceeding images, the reference orders of the first and second reference lists may be determined to be the same. The reference images and the reference orders indicated by the first and second reference lists may be the same.

Image data in a spatial domain may be reconstructed as decoding is performed according to coding units in maximum coding units, and a picture and a video that is a picture sequence may be reconstructed. The reconstructed video may be reproduced by a reproducing apparatus, stored in a storage medium, or transmitted through a network.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1.  A video prediction method comprising:

    determining reference information indicating at least one reference image for inter predicting an image;
    determining a first reference list and a second reference list, which each comprise the reference information and a reference order of the at least one reference image; and
    if the determined reference information indicates only images for uni-directional prediction, generating a reconstructed image by referring to images indicated by the first and second lists in a same reference order.

2.  The video prediction method of claim 1, wherein the determining of the first and second reference lists comprises, if reference information for inter predicting a current image in the B-slice type indicates only reference images for temporal uni-directional prediction, determining the reference order of the first reference list and the reference order of the second reference list to be same.

3.  The video prediction method of claim 1, wherein the generating of the reconstructed image comprises, if the second reference list of a current image in the B-slice type does not include the at least one reference image, determining the second reference list to comprise the reference information and the reference order identical to the first reference list and generating the reconstructed image by referring to images indicated by the first and second reference lists.

4.  The video prediction method of claim 1, wherein the determining of the first and second reference lists comprises, if reference images of a current image in the B-slice type comprise only reference images for a uni-directional prediction, determining numbers of reference images indicated by the first and second reference lists to be same, images indicated by the reference information included in the first and second reference lists to be same, and the reference orders of the first and second reference lists to be same.

5.  The video prediction method of claim 1, further comprising:

    determining the reference information and a prediction error by performing a prediction on the images; and
    encoding the reference information and the prediction error.

6.  The video prediction method of claim 5, wherein the encoding comprises, if reference images for inter predicting an image in the B-slice type comprise reference images for a uni-directional prediction, encoding uni-directional prediction information indicating whether the reference orders of the first and second reference lists are same, wherein the uni-directional prediction information for a current slice is encoded according to at least one image unit from among a slice, a sequence, and a picture.

7.  The video prediction method of claim 5, wherein the encoding comprises, if reference images determined for a current image comprise reference images for a uni-directional prediction, encoding slice type information including a new slice type that is prediction encoded according to a prediction mode wherein the reference orders of the first and second reference lists are set to be same, in addition to an I-slice type, a P-slice type, and a B-slice type.

8.  The video prediction method of claim 1, further comprising receiving the reference information indicating the at least one reference image for inter predicting an image.

9.  The video prediction method of claim 8, wherein the receiving of the reference information comprises receiving uni-directional prediction information indicating whether the reference orders of the first and second reference lists for inter predicting an image in the B-slice type are same,

the determining of the first and second reference lists comprises determining the reference orders of the first and second reference lists to be same based on the uni-directional prediction information, and

the uni-directional prediction information for a current slice is received according to at least one image unit from among a slice, a sequence, and a picture.

**10.** The video prediction method of claim 8, wherein the receiving of the reference information comprises receiving slice type information indicating a new slice type for determining the reference orders of the first and second reference lists based on whether reference images determined for a current image comprise only reference images for a uni-directional prediction in addition to an I-slice type, a P-slice type, and a B-slice type, and

The determining of the first and second reference lists comprises determining the reference orders of the first and second reference lists to be same based on the slice type information.

**11.** The video prediction method of claim 1, further comprising determining coding units according to a tree structure comprising coding units having coded depths and determining partitions for prediction encoding according to the coding units having the coded depths, in order to output an encoding result, from among deeper coding units having a hierarchical structure according to depths indicating a number of times a maximum coding unit is spatially split, according to the maximum coding unit,

wherein the determining of the reference information comprises determining reference information indicating the at least one reference image based on the partitions, and

the coding units having the coded depths are determined according to deeper coding units independently from adjacent deeper coding units, from among deeper coding units, and the coding units according to the tree structure comprise coding units having coded depths that are hierarchical in a same region and are independent in different regions, in the maximum coding unit.

**12.** A video prediction apparatus comprising:

a reference information determiner for determining reference information indicating at least one reference image for inter predicting an image;

a reference list determiner for determining a first reference list and a second reference list, which each comprise the reference information and a reference order of the at least one reference images;

a reconstructed image generator for generating, if the determined reference information indicates only images for a temporal uni-directional prediction, a reconstructed image by referring to images indicated by the first and second reference lists in a same reference order; and

a processor for controlling operations of the reference information determiner, the reference list determiner, and the reconstructed image generator.

**13.** The video prediction apparatus of claim 12, further comprising:

a predictor for determining at least one reference image and a prediction error by performing a prediction on the image; and

a prediction encoder for encoding the determined at least one reference image and prediction error.

**14.** The video prediction apparatus of claim 12, further comprising a reception extractor for extracting the reference information and a prediction error by parsing a received bitstream.

**15.** A computer-readable recording medium having recorded thereon a program for executing the video prediction method of claim 1.

# FIG. 1

```
          12                    14                    16
   ┌──────────────┐     ┌──────────────┐     ┌──────────────┐
   │  REFERENCE   │     │  REFERENCE   │     │ RECONSTRUCTED│
──▶│ INFORMATION  │────▶│    LIST      │────▶│    IMAGE     │──▶
   │  DETERMINER  │     │  DETERMINER  │     │  GENERATOR   │
   └──────────────┘     └──────────────┘     └──────────────┘
```

# FIG. 2

```
            22                         24
   ┌─────────────────┐      ┌─────────────────────┐
   │                 │      │    RECONSTRUCTED     │
──▶│    PREDICTOR     │─────▶│   IMAGE GENERATOR    │──▶
   │                 │      └─────────────────────┘
   └─────────────────┘
                     │          26
                     │   ┌─────────────────────┐
                     └──▶│     PREDICTION       │──▶
                         │      ENCODER         │
                         └─────────────────────┘
```

# FIG. 3

```
          32                      34
   ┌──────────────┐     ┌──────────────────┐
   │  RECEPTION   │     │  RECONSTRUCTED   │
──▶│  EXTRACTOR   │────▶│ IMAGE GENERATOR  │──▶
   └──────────────┘     └──────────────────┘
```

FIG. 4

```
                    ( START )
                        |
                        v
  +------------------------------------------+
  |  DETERMINE REFERENCE INFORMATION         |---- 42
  +------------------------------------------+
                        |
                        v
  +------------------------------------------+
  | DETERMINE FIRST AND SECOND REFERENCE LISTS |---- 44
  +------------------------------------------+
                        |
                        v
  +------------------------------------------+
  |  IN UNI-DIRECTIONAL PREDICTION, GENERATE |
  |  RECONSTRUCTED IMAGE BY REFERRING TO     |---- 46
  |  REFERENCE IMAGES OF FIRST AND SECOND    |
  |  REFERENCE LISTS IN SAME REFERENCE ORDER |
  +------------------------------------------+
                        |
                        v
                    (  END  )
```

FIG. 5

```
                         ( START )
                             |
                             v
        +-------------------------------------+
        | DETERMINE REFERENCE INFORMATION     |---- 52
        | BY INTER PREDICTION ON IMAGE        |
        +-------------------------------------+
                   |                    |
                   v                    v
         58                                   54
  +------------------+      +----------------------------+
  | ENCODE REFERENCE |      | DETERMINE FIRST AND        |
  | INFORMATION      |      | SECOND REFERENCE LISTS     |
  +------------------+      +----------------------------+
          |                              |
          |                              v
          |                                    56
          |              +----------------------------+
          |              | IN UNI-DIRECTIONAL PREDICTION, |
          |              | GENERATE RECONSTRUCTED IMAGE   |
          |              | BY REFERRING TO REFERENCE IMAGES|
          |              | OF FIRST AND SECOND REFERENCE  |
          |              | LISTS IN SAME REFERENCE ORDER  |
          |              +----------------------------+
          |                              |
          +--------------+---------------+
                         v
                     (  END  )
```

# FIG. 6

START

EXTRACT REFERENCE INFORMATION — 62

DETERMINE FIRST AND SECOND REFERENCE LISTS — 64

GENERATE RECONSTRUCTED IMAGE BY USING
FIRST AND SECOND REFERENCE LISTS — 66

IN UNI-DIRECTIONAL PREDICTION, REFER
TO REFERENCE IMAGES OF FIRST AND
SECOND REFERENCE LISTS IN SAME
REFERENCE ORDER — 68

END

# FIG. 7

100

110
## LCU SPLITTER

120
## CODING UNIT DETERMINER

130
## OUTPUTTER

# FIG. 8

200

210
## RECEIVER

220
## IMAGE DATA AND ENCODING INFORMATION EXTRACTOR

230
## IMAGE DATA DECODER

# FIG. 9

64
64 | 64×64

64
32 | 64×32

32
64 | 32×64

32
32 | 32×32

32
32 | 32×32

32
16 | 32×16

16
32 | 16×32

16
16 | 16×16

16
16 | 16×16

16
8 | 16×8

8
16 | 8×16

8
8 | 8×8

8
8 | 8×8

8
4 | 8×4

4
8 | 4×8

4
4 | 4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335 325

FIG. 10

EP 2 663 078 A2

# FIG. 11

# FIG. 12

MAXIMUM HEIGHT
AND MAXIMUM
WIDTH OF
CODING UNIT=64          MAXIMUM DEPTH =3

LCU

600

PREDICTION
UNIT/
PARTITION

64 / 610
64
64×64

64 / 612
32
64×32

32 / 614
64
32×64

32 / 616
32
32×32

32 / 620
32
32×32

32 / 622
16
32×16

16 / 624
32
16×32

16 / 626
16
16×16

16 / 630
16
16×16

16 / 632
8
16×8

8 / 634
16
8×16

8 / 636
8
8×8

SCU

8 / 640
8
8×8

8 / 642
4
8×4

4 / 644
8
4×8

4 / 646
4
4×4

DEEPER CODING UNIT

# FIG. 13

CODING UNIT (710)

64

64×64

TRANSFORMATION
UNIT (720)

32

32

32×32

# FIG. 14

PARTITION TYPE (800)

2N 802
2N CU_0
64×64

2N 804
N 0
1

N 806
2N 0 1

N 808
N 0 1
2 3

PREDICTION MODE (810)

812
INTRA MODE

814
INTER MODE

816
SKIP MODE

SIZE OF TRANSFORMATION UNIT (820)

822 824
INTRA

826 828
INTER

# FIG. 15

FIG. 16

CODING UNIT (1010)

FIG. 17

PREDICTION UNIT (1060)

# FIG. 18

1014
1016
1022
1032
1048
1054
1050
1052
TRANSFORMATION UNIT (1070)

FIG. 19

CU

1300

1302

| 1312 | 1314 |
| 1316 | 1318 |

1304

1306

PU

| | 1322 | 1324 | 1326 | 1328 | 1332 | 1334 | 1336 | 1338 |
| | 2Nx2N | 2NxN | Nx2N | NxN | 2NxnU | 2NxnD | nLx2N | nRx2N |

TU

1342

TU size flag=0

1344

TU size flag=1

TU

1352

TU size flag=0

1354

TU size flag=1

EP 2 663 078 A2

# FIG. 20

START

SPLIT CURRENT IMAGE INTO MAXIMUM CODING UNITS — 1210

DETERMINE CODING UNITS HAVING TREE STRUCTURE, PARTITION TYPE, AND PREDICTION MODE BY PERFORMING PREDICTION ENCODING USING REFERENCE LIST FOR BI- AND UNI-DIRECTIONAL PREDICTION BASED ON PARTITIONS OF HIERARCHICAL CODING UNITS, ACCORDING TO EACH MAXIMUM CODING UNIT — 1220

ENCODE REFERENCE INFORMATION AND ENCODING INFORMATION ACCORDING TO EACH MAXIMUM CODING UNIT — 1230

END

# FIG. 21

START

PARSE SYMBOLS OF RECEIVED BITSTREAM — 1310

EXTRACT REFERENCE INFORMATION AND ENCODING INFORMATION ACCORDING TO EACH MAXIMUM CODING UNIT — 1320

PERFORM PREDICTION COMPENSATION BY USING REFERENCE LIST FOR BI- AND UNI-DIRECTIONAL PREDICTION ON CODING UNITS AND PARTITIONS HAVING TREE STRUCTURE, ACCORDING TO EACH MAXIMUM CODING UNIT, AND GENERATE RECONSTRUCTED IMAGE — 1330

END